# EUROPÄISCHE PATENTSCHRIFT

(11) **EP 2 527 944 B1**
(45) Veröffentlichungstag und Bekanntmachung des Hinweises auf die Patenterteilung: **25.11.2020**
(21) Anmeldenummer: 12169105.9
(22) Anmeldetag: 23.05.2012
(51) Int. Cl.: G05D 16/20, F16K 31/06

(54) **Elektromagnetisches Druckregelventil**
Electromagnetic pressure regulator
Vanne de régulation de pression à commande électromagnétique

(30) Priorität: 27.05.2011 DE 102011103846
(43) Veröffentlichungstag der Anmeldung: 28.11.2012
(73) Patentinhaber: SVM Schultz Verwaltungs-GmbH & Co. KG, 87700 Memmingen (DE)
(72) Erfinder: Scherer, Georg, 87757 Kirchheim (DE); Mang, Helmut, 87700 Memmingen (DE); Schreiber, Florian, 89284 Kadeltshofen (DE)
(74) Vertreter: Patentanwälte Olbricht, Buchold, Keulertz Partnerschaft mbB

(56) Entgegenhaltungen:
- EP-A1- 1 965 112
- WO-A1-2009/092488

## Beschreibung

Die Erfindung betrifft ein elektromagnetisches Ventil mit einem Magnetteil und einem Ventilteil, das zumindest einen Zulauf, einen Rücklauf und/oder einen Verbraucheranschluss aufweist und wobei zwischen dem Zulauf und dem Rücklauf bzw. Verbraucheranschluss mindestens ein durch ein Schließglied verschließbares Sitzventil vorgesehen ist und wobei der Anker über eine Betätigungsstange mit dem Schließglied zusammenwirkt und die Betätigungsstange in einer Durchdringungsbohrung des Kerns angeordnet ist.

Das gattungsgemäße Druckregelventil wird insbesondere in Getriebesteuerungen eingesetzt. Im Vordergrund steht hier eine Anwendung in Automatikgetrieben, wobei auch herkömmliche Schaltgetriebe derartige Druckregelventile aufweisen. Die Druckregelventile in Getriebesteuerungen werden mit Getriebeöl betrieben. Bedingt durch Verschleißabrieb von Getriebekomponenten, beispielsweise von Kupplungslamellen oder Zahnrädern oder aufgrund von Restschmutz aus der Bauteilherstellung oder Montage kommt es zu einer Verunreinigung des Getriebeöls mit Schmutzpartikeln. Diese Schmutzpartikel bestehen oftmals aus magnetischen Materialien, bzw. enthalten derartige Bestandteile.

Aufgrund dessen, dass die den Anker mit dem Schließglied verbindende Betätigungsstange in dem mit Getriebeöl, gegebenenfalls auch verschmutzten, Getriebeöl befüllten Ventilteil des Druckregelventiles bewegt wird, gelangt zusammen mit der Bewegung der Betätigungsstange Getrieböl in den Magnetteil des elektromagnetischen Ventils. Zusammen mit diesem Eintrag von Getriebeöl kommt es unweigerlich zum Eintrag von Schmutzpartikeln in den Magnetinnenraum. Dieser Eintrag kann aufgrund der magnetischen Eigenschaften der mitgeführten Schmutzpartikel zu Funktionsstörungen oder Funktionsbeeinträchtigungen des Magneten bzw. des gesamten elektromagnetischen Ventils führen.

Es wird versucht, eine Trennung von Magnetteil und Ventilteil zu erreichen, indem spezielle Dichtungen an der Durchdringungsöffnung bzw. der Betätigungsstange vorgesehen werden. Eine weitere Möglichkeit zur Trennung von Magnetteil und Ventilteil wird dadurch zu erreichen versucht, dass ein dünner Stößel mit minimalem Spiel in das Magnetteil eingepasst ist, um so über eine Spaltdichtung den Ölzugang zum Magnetraum zu minimieren.

Aufgrund der hohen Betätigungsfrequenz und der anliegenden Drücke kann jedoch durch diese Maßnahmen das Eindringen bzw. Einströmen von Getriebeöl und damit der Schmutzpartikel in das Innere des Magnetteils nicht oder nur unzureichend verhindert werden.

Dokument WO 2009/092488 A1 offenbart eine Druckregelvorrichtung mit wenigstens einem Zulaufbereich und einem ersten Ablaufbereich sowie einem zweitem Ablaufbereich, die über zwei Sitzventile miteinander verbindbar sind. Dabei ist ein Flussregelgerät zum Richten des Flusses von fließendem Fluid in einer bestimmten Art und Weise heraus aus dem Zulaufbereich in Richtung des zweiten Sitzventils vorgesehen.

Das Dokument EP 1965112 A1 offenbart ein Dreiwegeventil und ein Verfahren zu dessen Herstellung. Dabei kann eine Auslassöffnung ausgewählt werden.

Aufgabe der vorliegenden Erfindung ist es daher, eine Beaufschlagung des Magnetteils eines elektromagnetischen Ventils mit Getriebeöl bzw. darin mitgeführten Partikeln zu reduzieren.

Diese Aufgabe wird gelöst durch ein gattungsgemäß weitergebildetes elektromagnetisches Ventil.

Dieses elektromagnetisches Ventil, bei dem es sich insbesondere um ein Druckregelventil oder ein Proportionaldruckregelventil handelt, weist einen Magnetteil aus wenigstens einer elektrisch ansteuerbaren Spule, einem Kern und einem in einem Ankerraum vorgesehenen, verschiebbar geführten Anker auf. Bei dem Ventil handelt es sich nicht zwangsläufig um ein Druckregelventil. Stattdessen kann auch ein Schaltventil oder ein sonstiges, in geeigneter Art und Weise ausbildbares Ventil Verwendung finden.

Das elektromagnetische Ventil umfasst des Weiteren ein Ventilteil, das zumindest einen Zulauf, einen Rücklauf und einen Verbraucheranschluss aufweist. Im Ventilteil ist zwischen dem Zulauf und dem Rücklauf oder Verbraucheranschluss mindestens ein, bevorzugt zwei je durch ein Schließglied verschließbare/s Sitzventil vorgesehen. Der in dem Ankerraum vorgesehene, verschiebbar geführte Anker wirkt dabei mit dem Schließglied zusammen. Dies erfolgt durch über eine zwischen Anker und Schließglied vorgesehene Betätigungsstange. Die Betätigungsstange ragt hierzu aus dem Ankerraum heraus und durchdringt dabei den Kern des Magnetteils. Hierfür ist im Kern eine Durchdringungsbohrung vorgesehen, in der die Betätigungsstange angeordnet ist und durch die die Betätigungsstange geführt wird. Das erfindungsgemäße elektromagnetische Ventil zeichnet sich dadurch aus, dass in die Durchdringungsbohrung ein Verbindungskanal mündet. Über diesen Verbindungskanal wird die Durchdringungsöffnung mit einem druckfreien oder druckreduzierten Entlastungsbereich verbunden.

Die erfindungsgemäße Ausführung des elektromagnetischen Ventils hat den Vorteil, dass aufgrund der durch den Verbindungskanal erzielbaren Druckminderung bzw. Druckableitung im Bereich des Kerns bzw. der Durchdringungsbohrung das druckbedingte Vordringen von Getriebeöl in den Ankerraum verringert, wenn nicht sogar vollständig unterbunden wird. Durch die Betätigungsstange mitgeführtes bzw. in die Durchdringungsbohrung eingeführtes öl, sowie die darin enthaltenen Schmutzpartikel werden auf ihrem Weg zum Ankerraum in den sich aus dem Verbindungskanal ergebenden druckfreien bzw. druckreduzierten Entlastungsbereich eingetragen. Die weitere Verschleppung von Öl bzw. Ölpartikelgemischen unterbleibt dadurch.

Durch die vorgeschlagene Ausführung des Ventils wird erreicht, dass in einfacher Art und Weise einen Eintrag von Getriebeöl und dieses verschmutzende Partikeln in den Ankerraum unterbunden wird. Der Aufwand für die Erzielung einer erhöhten Dichtheit aufgrund geometrischer Anpassungen von Betätigungstange und Durchdringungsbohrung und der dadurch erhöhte Aufwand bei der Herstellung des Ventil unterbleibt somit. Das erfindungsgemäß ausgeführte Ventil verhindert oder reduziert wesentlich den Öleintrag in sämtlichen Schließ- oder Endstellungen des Ventils, da der Verbindungskanal im Magnetkern angeordnet ist, somit ständig mit der Durchdringungsbohrung und der darin geführten bzw. bewegten Betätigungsstange in Kontakt steht. Weitergehende Dichtmaßnahmen beispielsweise am Austrittspunkt der Betätigungsstange aus dem Magnetteil bzw. am Eintrittspunkt der Betätigungsstange in das Innere des Ankerraums können so unterbleiben bzw. weniger aufwendig ausgeführt werden. Der im Kern angeordnete Verbindungskanal kann in einfacher Art und Weise, beispielsweise durch Einbringung einer Sacklochbohrung oder einer den Kern beispielsweise senkrecht zu seiner Längsachse durchdringende Durchgangsbohrung ausgebildet werden. Neben der senkrecht bzw. rechtwinklig oder radial zur Längsachse des Ankerraumes bzw. senkrecht zur Durchdringungsbohrung ausgeführten Anordnung des Verbindungskanals kann ebenfalls eine relativ zu den vorgenannten geneigte Anordnung des Verbindungskanals vorgesehen werden. Der druckentlastende bzw. druckminimierende Effekt des Verbindungskanals bleibt auf jeden Fall bestehen. Zusätzlich besteht die Möglichkeit, dass hier auf geometrische Besonderheiten des elektromagnetischen Ventils Rücksicht genommen wird und eine Weitergabe des in den Verbindungskanal eingespülten bzw. eingebrachten Getriebeöls wesentlich verbessert oder vereinfacht wird.

In einer als günstig angesehen Ausführungsform sind mehrere Verbindungskanäle vorgesehen. Hierbei können zwei oder mehr Verbindungskanäle vorgesehen werden, die sich radial zur Durchdringungsbohrung erstrecken. Die Verbindungskanäle sind dabei bevorzugt gegenüberliegend, kreuz- oder sternförmig angeordnet.

Als Kern beziehungsweise Magnetkern im Sinne der vorliegenden Erfindung wird ein eigenständiges Bauteil ebenso verstanden, wie ein Bereich, Teilbereich oder Abschnitt des Magnetteils bzw. ein einstückig mit dem Magnetteil ausgebildeter Bereich, Teilbereich oder Abschnitt des Magnetteiles, der bevorzugt zwischen dem Ankerraum und dem Ventilteil angeordnet ist und/oder sich jeweils in Richtung des Ventilteils erstreckt bzw. in dieses einsteht.

In einer bevorzugten Weiterbildung der Erfindung wird angegeben, dass der Kern und/oder das Magnetteil bzw. der Kernteil oder Kernabschnitt oder der Bereich oder Abschnitt oder Teil des Magnetteils, der in den Ventilteil einsteht, aus zwei oder mehr, insbesondere in axialer Richtung getrennten Teilen gebildet ist bzw. eine axialer Teilung aufweist. Eine solche Ausgestaltung erleichtert unter Umständen erheblich die Ausbildung des Verbindungskanals, insbesondere dann, wenn der Verbindungskanal zum Beispiel eine spiralförmige, also von einer geraden Bohrung abweisende, Form aufweist. Dabei kann insbesondere ein verhältnismäßig lang ausgebildeter Verbindungskanal für das zu erreichende Ergebnis, nämlich einer Verringerung des Eintrages von verschmutztem Öl in den Ankerraum von Vorteil sein. Neben der vorteilhaft vorgeschlagenen axialen Aufteilung des Kernes beziehungsweise Magnetteiles ist aber auch eine radiale Aufteilung des Kernes beziehungsweise Magnetteiles in einer Variante der Erfindung vorgesehen.

Die Erfindung ist auf die Anzahl der Kernteile beziehungsweise Magnetteilabschnitte nicht beschränkt, es können zwei oder mehrere vorgesehen sein.

In den Teilen sind radial zur Durchdringungsbohrung vorgesehene Ausnehmungen oder Nuten vorgesehen, die den wenigstens einen Verbindungskanal bzw. die Verbindungskanäle bilden. Als günstig wird angesehen, wenn der wenigstens eine Verbindungskanal bzw. die Verbindungskanäle in die Teile eingeformt ist/sind. Hierbei besteht die Möglichkeit, dass eine Ausnehmung oder eine Nut in die Teile eingefräst, eingeschnitten oder beim Herstellen der Teile direkt in diese eingeformt, beispielsweise in einem Spritzgussverfahren eingebracht wird. Durch Zusammensetzen bzw. Verbinden der Teile ergibt sich dann der Verbindungskanal bzw. bilden sich die Verbindungskanäle aus den sich ergänzenden Ausnehmungen in den jeweiligen Teilen.

In einer Weiterbildung der Erfindung ist vorgesehen, dass die Betätigungsstange zweiteilig ausgebildet ist. Dabei steht ein erster Teil mit den Schließgliedern des Ventils in Wirkverbindung, während ein zweiter Betätigungsstangenteil in die Durchdringungsbohrung einsetzbar ausgebildet ist. Erster und zweiter Betätigungsstangenteil stehen dabei bzw. nach Montage des erfindungsgemäßen elektromagnetischen Ventils in Wirkverbindung und betätigen das elektromagnetische Ventil. Der Kern beziehungsweise die dort vorgesehene Durchdringungsbohrung zentrieren die Befestigungsstange.

Eine als günstig angesehene Ausführungsform sieht vor, dass der Kern, ein den Verbindungskanal bzw. die Verbindungskanäle aufweisender und/oder dem Druckraum zugewandter Bereich des Kerns bzw. des Magnetteils als gesondertes Bauteil ausgebildet ist. Hierbei kann vorgesehen werden, dass der Kern direkt durch den Magnetteil gebildet wird, alternativ besteht selbstverständlich die Möglichkeit, dass der Kern selbst als vom Magnetteil getrenntes, mit diesem jedoch formschlüssig verbundenes Element des elektromagnetischen Ventils vorliegt und ein den Verbindungskanal bzw. die Verbindungskanäle aufweisender Bereich dieses Kerns als gesondertes Bauteil ausgebildet ist oder vorliegt. Vorteile bietet diese Ausgestaltungsform insbesondere bei der Herstellung und Montage der erfindungsgemäßen elektromagnetischen Ventile, da ein gesondertes Bauteil, beispielsweise auch in einem vereinfachten Herstellungsverfahren, wie beispielsweise einem Spritzgieß- oder Prägeverfahren hergestellt werden kann und erst bei der Montage mit dem eigentlichen (Magnet)Kern bzw. Magnetteil verbunden in dem elektromagnetischen Ventil verbaut wird.

Um eine Einbaurichtung bzw. Einbaulage des gesonderten Bauteils vorzugeben bzw. um die Montage und Justage wesentlich zu vereinfachen ist vorgesehen, dass der Magnetteil oder ein Magnetteilabschnitt bzw. der Magnetteil oder Magnetteilabschnitt, der mit dem gesonderten Bauteil bzw. dem Kern in Eingriff bringbar ist, einen Zentrierstift oder eine Zentrierbohrung für den zentrierten Einbau des gesonderten Bauteils aufweist. Beim Montieren des elektromagnetischen Ventils wird eine dem Zentrierstift bzw. der Zentrierbohrung entsprechende Ausnehmung bzw. ein Vorsprung an dem Bauteil mit dem Zentrierstift oder der Zentrierbohrung in Eingriff gebracht und somit eine lageorientierte Ausrichtung des gesonderten Bauteils ermöglicht. Selbstverständlich bleibt die Ausgestaltung nicht auf die Anordnung eines einzigen Zentrierstiftes bzw. einer einzigen Zentrierbohrung beschränkt. Es können auch zwei und mehr Zentrierstifte oder Zentrierbohrungen oder Kombinationen hieraus vorgesehen werden. Dies vermeidet zugleich Fehler bei der Bauteilmontage.

Magnetteil, Kern und/oder gesondertes Bauteil können bevorzugt aus verschiedenartigen Materialien gebildet sein. Hierbei wird es als besonders vorteilhaft angesehen, wenn das gesonderte Bauteil aus Kunststoff, insbesondere aus einem temperatur-, säure- und/oder ölbeständigen Kunststoff, bevorzugt aus Polyphenylensulfit, Polyamid, Polytetrafluorethylen, Polychlortrifluorethylen oder dergleichen sowie Mischungen daraus gebildet ist.

Alternativ oder zusätzlich kann das gesonderte Bauteil eine Beschichtung mit diesen Kunststoffen bzw. Mischungen daraus aufweisen. Die Herstellung aus einem Kunststoffmaterial erweist sich als besonders vorteilhaft, da das gesonderte Bauteil hierdurch relativ kostengünstig in einem Spritzgießverfahren hergestellt werden kann. Auch bezüglich der Ausgestaltung des gesonderten Bauteils ergeben sich im Zuge der Verwendung entsprechender Herstellungsverfahren Vorteile, da die inneren Strukturen des gesonderten Bauteiles, insbesondere die dort vorgesehenen Verbindungskanäle bereits bei der Herstellung in dem gesonderten Bauteil vorgesehen werden und eine Nachbearbeitung somit nicht notwendig ist.

Neben der zuvor bereits ausgeführten Möglichkeit, den Verbindungskanal bzw. die Verbindungskanäle als kreuz- oder sternförmig und/oder sich radial zur Durchdringungsbohrung erstreckende Verbindungskanäle auszugestalten, sieht eine weitere bevorzugte Ausführungsform der Erfindung vor, dass die Verbindungskanäle bzw. der Verbindungskanal als durchgehende Bohrung/en im Kern bzw. im Kernteil oder Kernteilabschnitt vorgesehen ist/sind.

Der wenigstens eine Verbindungskanal kann auch Winklungen oder eine Krümmung aufweisen. Im Bereich des wenigstens einen Verbindungskanals kann im Kern eine Einkerbung, Bohrung oder sonstige Ausnehmung vorgesehen werden, in die der Verbindungskanal bzw. die Verbindungskanäle mündet/münden. Hierdurch wird aufgrund des gegenüber dem wenigstens einen Verbindungskanal vergrößerten Volumens eine weitere Minderung des anliegenden Druckes erreicht. Des gleichen dient die Einkerbung, Ausnehmung oder Bohrung im Kern als Aufnahme, Aufnahmeraum oder Zwischenreservoir für das über den wenigstens einen Verbindungskanal von der Durchdringungsbohrung weggeleitete Öl bzw. Ölpartikelgemisch. Die Ausnehmung kann dabei so eingestellt bzw. ausgeformt oder angelegt sein, dass diese wiederum in einen nachgelagerten Ableitekanal mündet, über den beispielsweise bei vollständiger Befüllung der Ausnehmung bzw. des Verbindungskanals oder Aufnahmeraumes überschüssiges Öl wieder in den Ölkreislauf zurückgeführt wird. Daneben besteht die Möglichkeit, dass eine Verbindung mit dem Rücklauf besteht, über den das abgesonderte Öl bzw. Ölpartikelgemisch wiederum in den Ölkreislauf gelangt.

In einer Weiterbildung ist vorgesehen, dass der wenigstens eine Verbindungskanal in ein in dem Kern und/oder in einem in den Ventilteil einstehenden Magnetteil und/oder in einem den Kern und/oder den Magnetteil aufnehmenden Gehäuse vorgesehene Nut oder Ringnut mündet und die Nut oder Ringnut wiederum mit einem Ableitekanal oder einer Bohrung in Verbindung steht. Das in die Nut oder Ringnut abgeschiedene Öl oder Ölpartikelgemisch wird über diesen Ableitekanal bzw. die Bohrung vom Kern bzw. Magnetteil weggeleitet und von dort aus dem erfindungsgemäßen elektromagnetischen Ventil entnommen bzw. in einen Ölkreislauf zurückgeführt.

Der Kern des Magnetteils, begrenzt den Ankerraum gegenüber dem Ventilteil und dient als Aufnahme der Durchdringungsbohrung und für die Anordnung des Verbindungskanals.

Der druckfreie bzw. druckreduzierte Entlastungsbereich ist günstiger Weise in den Kern eingeformt bzw. durch den Kern, einen Kernteil oder einen Kernteilabschnitt gebildet oder begrenzt. Hierdurch bietet sich die Möglichkeit, dass die erfindungsgemäßen Wirkungen erzielt werden, ohne dass eine Anpassung des Gehäuses bzw. Ventilteils selbst durchgeführt werden muss. Entlastungsbereich und Aufnahmeraum für die abgeschiedenen Medien werden durch den Kern, Kernteil oder Kernteilabschnitt selbst zur Verfügung gestellt. Die Gehäusegeometrie des elektromagnetischen Ventils muss somit nicht angepasst werden.

Bezüglich seiner Längserstreckung ragt der Kern in den den Rücklauf beinhaltenden Teil des Ventilteils hinein und verfügt über eine umlaufende Strömungskante. Der in den Ventilteil einstehende Teil, bildet gleichzeitig die obere Begrenzung des Ventilteiles. Ebenfalls in den Kern eingeformt ist der druckfreie Bereich. Dies wird dadurch erreicht, dass der Kern im Bereich des Verbindungskanals einen reduzierten Umfang aufweist. Hierüber ergibt sich gegenüber dem den Kernteil aufnehmenden Teil des Ventilteils eine Beabstandung, die als druckfreier Raum bzw. als Befüllungsraum für das in dem Verbindungskanal abgeschiedene Öl bzw. Ölpartikelgemisch zur Verfügung steht. Als vorteilhaft erweist es sich, wenn der wenigstens eine Verbindungskanal in die Umfangsreduzierung bzw. die Umfangsnut mündet.

Magnetteil und Ventilteil sind axial zueinander angeordnet. Das Ventilteil bildet dabei ein hülsen- oder napfartiges Gehäuse und umschließt teilweise den Kern beziehungsweise Kernteil bzw. einen in das Ventilteil einstehenden vorspringenden Teil davon. Der Innendurchmesser des napfartigen Gehäuses kann dabei einen gesamten Umfang eines reduzierten Durchmesser aufweisen. Gleichzeitig besteht die Möglichkeit, dass eine Umfangs- bzw. Materialreduzierung nur im Austrittsbereich des Verbindungskanals vorgesehen wird, um hier einen Aufnahmeraum für das abgeschiedene Öl zu bilden.

Der druckfreie bzw. durckreduzierte Entlastungsbereich oder ein Aufnahmeraum für das abgesonderte Öl oder Ölpartikelgemisch ist bevorzugt in einem den Kern, Kernteil oder Kernteilabschnitt bzw. den Magnetteil aufnehmenden Abschnitt eines Gehäuses des Ventils bzw. einem das Ventil umgebenden Gehäuse vorgesehen. Hierbei ist günstigerweise vorgesehen, dass der Abschnitt des Gehäuses, der den Kern, Kernteil, Kernteilabschnitt oder den Magnetteil aufnimmt bzw. in das diese jeweils einstehen, eine Umfangs- bzw. Materialreduzierung in einem Austrittsbereich des wenigstens einen Verbindungskanals aufweist. Hierdurch wird wiederum der druckreduzierende Entlastungsbereich bzw. ein Aufnahmeraum geschaffen. Alternativ besteht selbstverständlich auch die Möglichkeit, dass der Entlastungsbereich selbst im Kern bzw. im Magnetteil vorgesehen ist, während der Aufnahmeraum für die Öl oder Ölpartikelgemische im Gehäuseabschnitt vorgesehen ist und sich somit ein synergistischer Effekt ergibt.

Eine vorteilhafte Weiterbildung des elektromagnetischen Ventils sieht vor, dass das Ventilteil bzw. ein Ventilgehäuse einen insbesondere napfartig ausgeführten Aufnahmebereich für den Kern und/oder Magnetteil bzw. einen in dem Ventilteil bzw. Gehäuseabschnitt einstehenden Abschnitt des Magnetteils oder des Kerns aufweist.

Zwischen dem Boden des napfartig ausgeführten Aufnahmebereiches des Ventilteils und dem in dieses einstehenden Teils des Kerns, Kernteils oder Kernteilabschnittes und/oder des Magnetteils liegt ein Abstand vor, der den Rücklauf zur Verfügung stellt. Der Abstand kann dabei nicht nur den Rücklauf zur Verfügung stellen, sondern auch als Aufnahmeraum für das abgeschiedene Öl- bzw. Ölpartikelgemisch dienen. Ist dieser Aufnahmeraum gefüllt, kann das hierin gesammelte Medium an den Rücklauf weitergegeben und in den Ölkreislauf zurückgeführt werden. Der Rücklauf ist bevorzugt gegenüber dem übrigen Ventilteil durch ein erstes über ein Schließglied verschließbares Sitzventil fluidisch getrennt. Der Ventilsitz weist dabei eine Abdichtung auf, die mit dem ersten Schließglied zusammen wirkt und somit in einer ersten Funktionsstellung des Ventils den Rücklauf gegenüber dem übrigen Ventil abschließt.

In einer zweiten Funktionsstellung des Ventils kann das erste Schließglied über eine Bewegung der Betätigungsstange an den in das Ventilteil einstehenden Teil des Magnetteils angeschlagen werden. Das Schließglied ist dabei derart ausgestaltet, dass dieses vollflächig an der stirnseitig am in den Ventilteil einstehenden Magnetteil vorgesehenen Fläche anliegt und die Durchdringungsbohrung bei Öffnung des Rücklaufs abdichtet. Eine vollständige Abdichtung ist jedoch auch in diesem Fall nicht möglich, weshalb die Möglichkeit besteht, dass Öl oder Ölpartikelgemisch in die Durchdringungsbohrung eintritt und bis zum Ankerraum vordringen würde, wenn kein Verbindungskanal, der den Ölfluss unterbindet bzw. ableitet vorgesehen ist.

In einer ersten Funktionsstellung des Elektromagneten ist der Zulauf mit dem Verbraucher verbunden, da die Betätigungsstange auf ein zweites Schließglied einwirkt und eine Verbindung zwischen Verbraucheranschluss und Zulauf herstellt. In einer zweiten Funktionsstellung ist der Zulauf, aufgrund der zurückgezogenen Betätigungsstange in einer Schlußposition, während aufgrund der Bewegung der Betätigungsstange das erste Schließglied aus dem Ventilsitz angehoben ist. Hierdurch wird dann die Verbindung zwischen Verbraucheranschluss und Rücklauf hergestellt. Dabei wird der zwischen dem Magnetteil und dem Ventilteil bestehende Raum mit Öl befüllt, das gegebenenfalls Partikel mit sich führt. Der Abschnitt der Betätigungsstange, der in dem Zwischenraum geführt ist, steht somit in Kontakt mit dem vorhandenen Öl und ist durch dieses benetzt. Bei Bewegung der Betätigungsstange und einem weiteren Einführen in die Durchdringungsbohrung wird dieses Öl, dass an der Betätigungsstange anhaftet in die Durchdringungsbohrung eingetragen. Durch die weitere Bewegung der Betätigungsstange wird das Öl in der Durchdringungsbohrung weiter in Richtung des Ankerraumes verbracht und gelangt in den Verbindungskanal. Durch den Verbindungskanal wird zum einen eine Druckminderung bzw. der vollständige Abbau des ansonsten im Magnetventil herrschenden Druckes erreicht, so dass keine weitere Druckbeaufschlagung des in der Durchdringungsbohrung vorhandenen Öles mehr erfolgen kann, die dieses in den Ankerraum eindrücken würde. Daneben stellt der Verbindungskanal auch ein Sammelbecken für das an der Betätigungsstange anhaftende Öl zur Verfügung. An dem sich zwischen dem Verbindungskanal und der Durchdringungsbohrung ausbildenen Kanten kommt es zusätzlich zu einem Abstreifen des an der Betätigungsstange anhaftenden Öles. Die Kanten weisen hierzu eine entsprechend vorteilhafte Geometrie auf, die ein Abstreifen von Öl und/oder Ölpartikelgemisch begünstigt. Die Erfindung umfasst auch Proportionaldruckregelventile.

In der Zeichnung ist die Erfindung insbesondere in einem Ausführungsbeispiel schematisch dargestellt. Es zeigen:
- Fig. 1: eine bevorzugte Ausführungsform des erfindungsgemäßen elektro-magnetischen Ventils in seitlicher Schnittdarstellung,
- Fig. 2: eine den Stand der Technik darstellende Ausführungsform eines elektromagnetischen Ventils ebenfalls in seitlicher Schnittdarstellung,
- Fig. 3a: eine weitere bevorzugte Ausführungsform des erfindungsgemäßen elektromagnetischen Ventils in seitlicher Schnittdarstellung,
- Fig. 3b: ein Schnitt durch den Kern entlang der Linie A-A in Fig. 3a,
- Fig. 4a: eine bevorzugte Ausführungsform des erfindungsgemäßen elektromagnetischen Ventils in seitlicher Schnittdarstellung,
- Fig. 4b: ein Schnitt durch den Kern entlang der Linie A-A in Fig. 4a.

In den Figuren sind gleiche oder einander entsprechende Elemente jeweils mit den gleichen Bezugszeichen bezeichnet und werden daher, sofern nicht zweckmäßig, nicht erneut beschrieben.

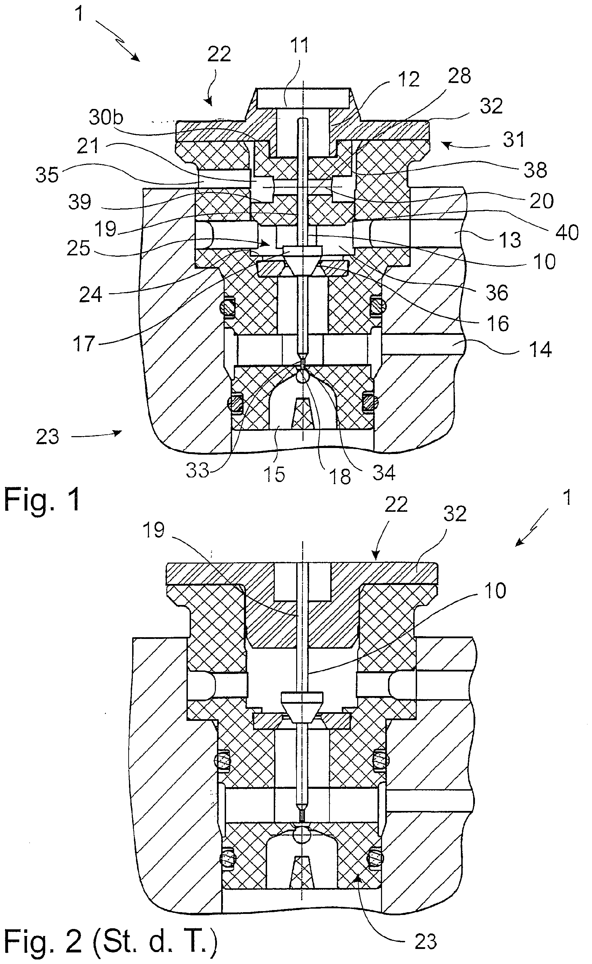

Fig. 1 stellt eine mögliche Ausführungsform eines elektromagnetischen Ventils 1 dar. Dieses besteht aus einem Ventilteil 23 und einem Magnetteil 22. Magnetteil 22 und Ventilteil 23 sind koaxial zueinander angeordnet. Das Ventilteil 23 weist in seinem dem Magnetteil 22 zugewandten Bereich eine hülsen- oder napfartige Ausbildung auf, in der gegenüber dem Magnetteil vorspringende Kern 32 bzw. ein gesonderter Kernteil 30b aufgenommen ist. In Fig. 1 ist lediglich der untere Begrenzungsteil 31 des Magnetteils 22 gezeigt. Ebenfalls ist der untere Teil des Ankerraums 12, in dem der Anker 11 geführt ist, erkennbar. Der übrige Magnetteil 22 weist in herkömmlicher Art und Weise einen Spulenkörper mit auf den Spulenkörper aufgewickelter Spule auf, in dem der Anker 11 beweglich geführt ist. In Fig. 1 ist der Kern 32 dargestellt, der dem Ventilteil 23 zugewandt ist. Von der Bezeichnung Kern 32 ist gleichermaßen ein Kernteil 30b bzw. Kernteilabschnitt 30a umfasst. Sofern Kernteil 30b bzw. Kernteilabschnitt 30a besondere Merkmale oder Ausführungsformen aufweisen, werden diese gesondert beschreiben. Im Kern 32 angeordnet befindet sich die Durchdringungsbohrung 19, durch die eine sich an den Anker 11 anschließende bzw. mit diesem verbundene Betätigungsstange 10 geführt ist. Die Betätigungsstange 10 verbindet den Anker 11 mit einem ersten Schließglied 17, das in einer ersten Funktionsstellung des elektromagnetischen Ventil 1 in einem ersten Ventilsitz 16 aufgenommen ist. Die Betätigungsstange 10 setzt sich in axialer Richtung des Ventilteils 23 fort und läuft in einem Stößel 33 aus, der auf ein zweites Schließglied 18, im Ausführungsbeispiel als Kugel ausgeführt, wirkt. Über den zweiten Ventilsitz 34, in dem das zweite Schließglied 18 aufgenommen ist, ist eine Verbindung zwischen dem Zulauf 15 und dem Verbraucheranschluss 14 herstellbar.

In einer zweiten Funktionsstellung des elektromagnetischen Ventils 1 wird der Elektromagnet des Magnetteiles mit elektrischem Strom beaufschlagt, woraus eine Ankerbewegung resultiert. Die mit dem Anker verbundene Betätigungsstange 10 wird in gleicher Weise verschoben. Gelangt der Anker in seine zweite Maximallage (zum Beispiel bei vollständiger Bestromung des Elektromagneten), wird das erste Schließglied 17 aus dem ersten Ventilsitz 16 angehoben. Hierbei wird das erste Schließglied 17 aus dem ersten Ventilsitz 16 angehoben. Gleichzeitig wird die Verbindung zwischen Stößel 33 und zweitem Schließglied 18 aufgehoben und das zweite Schließglied 18, aufgrund des einströmenden, unter Druck stehenden Fluids in den zweiten Ventilsitz 34 eingedrückt. Hierdurch wird die Verbindung von Zulauf 15 und Verbraucheranschluss 14 unterbrochen. Stattdessen wird das erste Schließglied 17 aus dem ersten Ventilsitz 16 gehoben und eine Verbindung zwischen Verbraucheranschluss 14 und Rücklauf 13 geöffnet.

Eine dritte Funktionsstellung des elektromagnetischen Ventiles 1 ist durch die Regelung des Druckes gekennzeichnet, bei welchem die Betätigungsstange 10 durch die Bestromung des Elektromagneten und daraus resultiert die Stellung des Ankers so positioniert ist, dass das untere, zweite Schließglied 18 aus dem zweiten Ventilsitz 34 abgehoben und somit geöffnet ist und eine regelbare Drucksteuerung durch die Stellung des ersten, insbesondere kegelartigen Schließgliedes 17 gegenüber dem ersten Ventilsitz 16 erfolgt.

In dem zwischen Kern 32 und dem Boden 24 der napfartigen Ausnehmung 25 im Ventilteil 23 gebildeten Raum 36 befindet sich bei Betrieb des erfindungsgemäßen elektromagnetischen Ventils 1 Getriebeöl, das unter Umständen mit Partikel verschmutzt bzw. durchsetzt ist. Diese Partikel können durch die Durchdringungsbohrung 19 in den Ankerraum 12 gelangen. Dies erfolgt dadurch, das aufgrund der hohen im Ventil 1 herrschenden Drücke das Öl, insbesondere Getriebeöl durckbeaufschlagt in die Durchdringungsbohrung 19 gepresst wird. Außerdem wird aufgrund der mit hoher Frequenz betätigten Betätigungsstange 10, an der Öl anhaftet, dieses mit der Bewegung der Betätigungsstange 10 in die Durchdringungsbohrung 19 und damit bis in den Ankerraum 12 verschleppt. Um dies zu vermeiden, ist in der Fig. 1 dargestellten erfindungsgemäßen Ausführungsform des Ventils 1 ein Verbindungskanal 20 vorgesehen. Dieser verbindet die Durchdringungsbohrung 19 mit einem ebenfalls im Kern 32 vorgesehenen

Entlastungsbereich 21. Durch die Durchdringungsbohrung 19 in den Kern 32 eindringendes Öl, das gegebenenfalls unter Druck steht, dringt bis zum Verbindungskanal 20 in der Durchdringungsbohrung 19 vor. In den senkrecht zur Durchdringungsbohrung 19 angeordneten Verbindungskanal 20 tritt dieses Öl aus. Daneben kommt es, dadurch dass der Verbindungskanal 20 und die Durchbringungsbohrung 19 eine Kante ausbilden, zum Abstreifen des anhaftenden Öls.

Im Kern 32 angeordnet befindet sich der Verbindungskanal 20, der die Verbindung zwischen der Durchdringungsbohrung 19 und einem Entlastungsbereich 21 herstellt. Dieser Entlastungsbereich 21 wird entweder durch den den Kern 32 umschließenden Bereich des Ventilteils 23 gebildet. Daneben besteht die Möglichkeit, dass der Entlastungsbereich 21 durch entsprechende Ausnehmungen bzw. Einkerbungen oder Nuten in dem in den Ventilteil 23 einstehenden Abschnitt des Magnetteils 22 oder durch eine Umfangsreduzierung des Kerns 32 bzw. eines Kernteils 30b bzw. Kernteilabschnittes 30a gebildet wird. Auch ist eine Ausbildung duch Umfangsreduzierung (vollumfänglich oder teilweise) des Ventilteils 23 und des Kerns 32 möglich. Insgesamt wird wie aus Fig. 1 ersichtlich Entlastungsbereich 21 durch das Zusammenwirken von Magnetteil 22 und Ventilteil 23 bzw. Ventilteil 23 und Kern 32 gebildet. Der Entlastungsbereich 21 steht in Verbindung mit einer nach außen, das heißt, zur vom Kern 32 abgewandten Seite hin sich öffnenden Bohrung. Das über die Durchdringungsbohrung 19 bzw. von der Betätigungsstange 20 mitgeführte Öl bzw. Ölpartikelgemisch gelangt im Betrieb des elektromagnetischen Ventils 1 bis zum Verbindungskanal 20 und wird in diesem von der Betätigungsstange 10 abgeschieden bzw. bei geeigneter Ausführung der sich zwischen der Durchdringungsbohrung 19 und dem Verbindungskanal 20 gebildeten Kante von der Betätigungsstange 10 abgestreift. Die beispielsweise ringartigen oder ringförmig ausgebildete Kante 28 kann hierzu eine entsprechende Ausgestaltung oder Ausführung bzw. Ausformung aufweisen.

Nach dem Abstreifen sammelt sich das Öl im Verbindungskanal 20. Ebenfalls in dem Verbindungskanal 20 eingetragen wird Öl, das aufgrund der im Ventil 1 herrschenden Drücke in die Durchdringungsbohrung 19 eingepresst wird. Durch den Verbindungskanal 20 mit sich daran anschließenden Entlastungsbereich 21 wird eine Druckentlastung geschaffen, so dass das eindringende Öl lediglich bis zum Verbindungskanal 20 vordringt. Ist der Verbindungskanal 20 mit Öl gefüllt, so tritt dieses durch die Bohrung 25 aus dem Kern 32 bzw. dem den diesen umschließenden Ventilteil 23 aus und kann in den Ölkreislauf zurückgeführt werden. In jedem Fall wird das Öl von der Durchdringungsbohrung 19 abgeführt und gelangt daher nicht in den Ankerraum 12, wo aufgrund des Öls bzw. der darin enthaltenen Partikel ansonsten eine Funktionsstörung des Elektromagneten auftreten könnte.

Im Ausführungsbeispiel ist der Verbindungskanal 20 als durchgehende, radial zur Durchdringungsbohrung 19 ausgerichtete Bohrung im Kern 32 ausgebildet. Die im Ausführungsbeispiel insgesamt zwei Bohrungen ergänzen sich zu einem dem Durchmesser des Kerns 32 entsprechenden Verbindungskanal 20, der auf zwei Seiten aus dem Kern 32 austritt.

Neben der hier angedeuteten senkrecht bzw. radial zur Durchdringungsbohrung 19 ausgerichteten Anordnung des Verbindungskanales 20 besteht selbstverständlich auch die Möglichkeit, dass dieser in einem Winkel zwischen 0 und 90 Grad gegenüber der Durchdringungsbohrung 19 geneigt im Kern 32 angeordnet ist. Ebenfalls denkbar ist eine Ausführung des Verbindungskanals 20 mit Abwinklungen oder Krümmungen, um hierüber einen besseren Anschluss an an dem Ventilteil 23 möglicherweise vorgesehene Bohrungen 25 oder der gleichen zu schaffen.

Im Ausführungsbeispiel weist der Verbindungskanal 20 einen durchmesserreduzierten Bereich 38, der sich in Richtung der umlaufend im Kern 32 vorgesehenen Nut 39 aufweitet. Diese Aufweitung bildet einen Raum 36 bzw. Aufnahmeraum für das abgeschiedene Öl bzw. Ölpartikelgemisch.

Neben der hier dargestellten Ausführungsform besteht auch die Möglichkeit, dass der Verbindungskanal 20 konisch ausgeführt ist. In einer weiteren Ausführungsform kann der Verbindungskanal 20 mit stets gleichem Durchmesser gebildet werden. Ebenfalls besteht die Möglichkeit, dass die Nut 39 auf den Durchmesser des Verbindungskanals 20 in der Nutweite angepasst wird. Der Kern 32 verfügt zum einen über die in den Kern 32 eingeschnittene Nut 39, zum anderen über einen sich hieran in Richtung des Ankerraums 12 anschließenden durchmesserverringerten Bereich. Hierdurch wird der Entlastungsbereich 21 vergrößert bzw. zusätzlicher Raum für einen Druckabbau bzw. die Ansammlung von Öl geschaffen. An dem unterhalb des Verbindungskanals 20 gelegenen und dem Bereich zwischen Ventilteil und Kern 32 zugewandten Ende des Kerns 32 weitet dieser sich wieder auf und nimmmt insgesamt den Durchmesser der im Ventilteil 23 für die Aufnahme des Kerns 32 vorgesehenen Ausnehmung 25 an. Für eine vereinfachte Montage weist der Kern 32 eine Fase 40 auf. Diese begünstigt zusätzlich die Strömungsverhältnisse im Rücklauf 13, da hier keine in den direkten Strömungsfluidfluss einstehenden, vorspringenden Kanten vorhanden sind, die sich ungünstig auf die Strömungsverhältnisse im Rücklauf 13 auswirken würden.

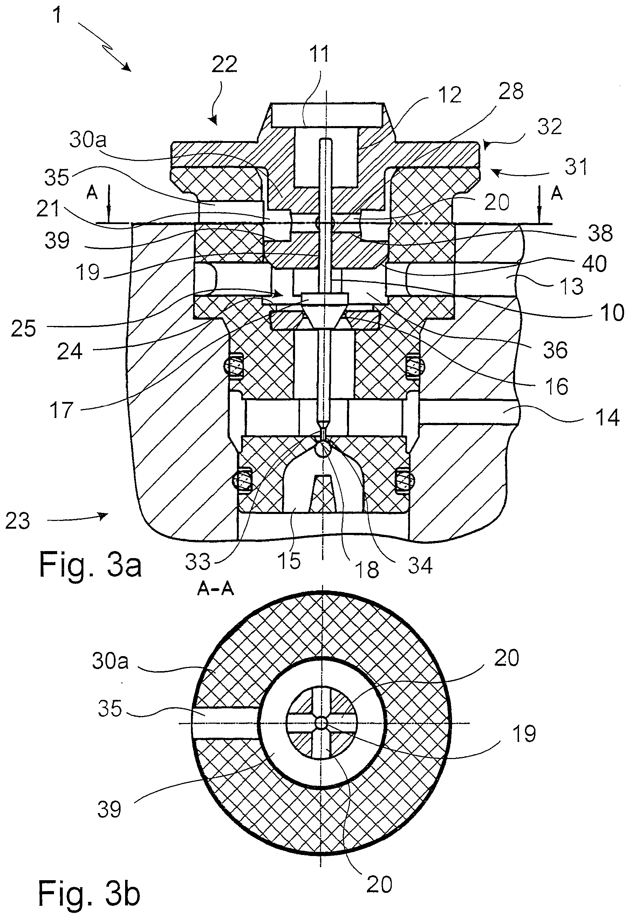

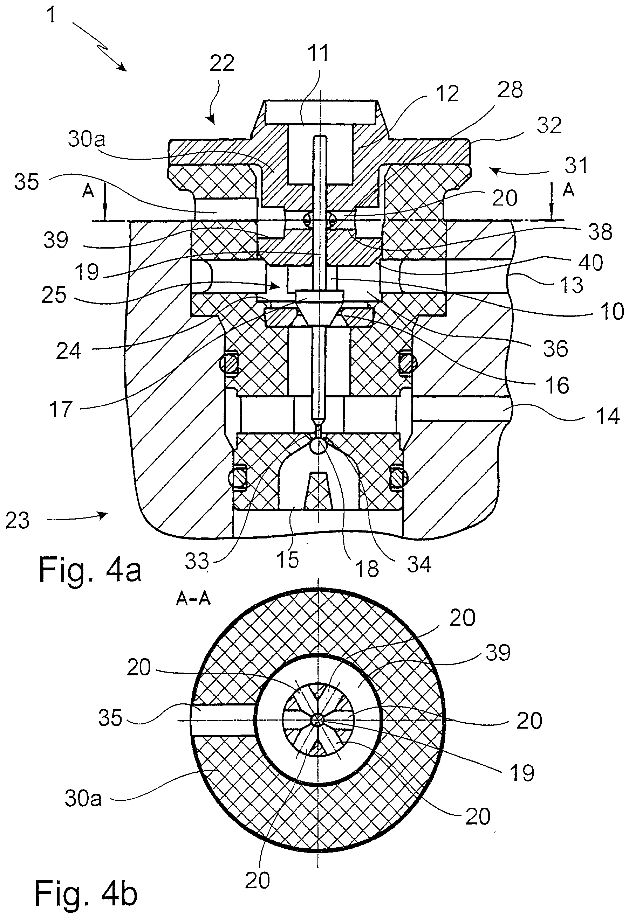

Die in Fig. 1 dargestellte Ausführungsform des erfindungsgemäßen elektromagnetischen Ventils hat den Vorteil, dass das Eindringen von Öl in den Ankerraum 12 wirkungsvoll unterbunden wird, ohne dass hier zusätzliche Abdichtungsmaßnahmen oder Abstimmungen der Geometrie von Betätigungsstange 10 und Durchdringungsbohrung 19 durchgeführt werden müssen. Diese sind jedoch gleichwohl möglich. So kann beispielsweise der Durchmesser der Betätigungsstange 10 reduziert werden. Diese kann dann mit minimalem Spiel in die Durchdringungsbohrung 19 eingepasst werden, um den Ölzugang zum Ankerraum 12 weiter zu minimieren. So kann Öl lediglich bis zum Verbindungskanal 20 vordringen, wird jedoch nicht in den Ankerraum 12 eingetragen. Der Verbindungskanal 20 ist im Ausführungsbeispiel als durchgehende Bohrung oder als mehrere beispielsweise sich kreuzende oder strahlenförmig von der Durchdringungsbohrung 19 abgehende Bohrungen im Kern 32 des elektromagnetischen Ventils 1 angeordnet werden (vergleiche Fig. 3a, 3b, 4a, 4b).

Fig. 2 zeigt den bisher bekannten Stand der Technik. Hier ist erkennbar, dass im Kern 32 des elektromagnetischen Ventils 1 kein Verbindungskanal 20 vorgesehen ist. Eine Abdichtung des Ventilteils 23 gegen über dem Magnetteil 22 wird hierbei lediglich durch eine Spaltdichtung erzielt, die durch einen dünnen Stößel bzw. einen sehr dünne Betätigungsstange 10, die mit minimalem Spiel in das Magnetteil 22 eingepasst ist, gebildet wird. Eine derartige Dichtwirkung ist auch in der in Fig. 1 dargestellten Ausführungsform möglich, zusätzlich hierzu wird der Ölfluss entlang der Betätigungsstange 10 in einen durch den Verbindungskanal 20 gebildeten bzw. durch diesen mit der Durchdringungsbohrung 19 verbundenen druckfreien Entlastungsbereich 21 des elektromagnetischen Ventils 1 abgeleitet, wodurch eine Weiterleitung in den Ankerraum 12 verhindert werden kann, was im Stand der Technik bisher nicht vorgesehen ist und diesen somit vorteilhaft weiterbildet.

Fig. 3a zeigt ein, bereits im Zusammenhang mit der Fig. 1 beschriebenes, elektromagnetisches Ventil. Auch hier ist ein Kern 32 vorgesehen. Im Gegensatz zur Fig. 1 besteht der Kern 32 im Ausführungsbeispiel der Fig. 3a aus einem einzigen Bauteil. Dieses schließt sich an den Magnetteil 22 an bzw. ist formschlüssig mit diesem verbunden. Alternativ bestünde auch die Möglichkeit, dass der Kern 32 einstückig aus dem Magnetteil 22 gebildet ist und somit der Kernteilabschnitt 30a, der in das Ventilteil 23 einsteht, durch das Magnetteil 22 selbst zur Verfügung gestellt wird. Im Ausführungsbeispiel der Fig. 3a stellt der Kern 32 bzw. Kernteilabschnitt 30a die Durchdringungsbohrung 19 zur Verfügung. Des Weiteren sind in dem Kernteilabschnitt 30a die Verbindungskanäle 20 vorgesehen, über die das durch die Betätigungsstange 10 mitgeführte Öl oder Ölpartikelgemisch aus dem Kernteilabschnitt 30a abgeführt wird. Im Ausführungsbeispiel weist der Kern 32 insgesamt vier Verbindungskanäle 20 auf, die sich jeweils radial zur Durchdringungsbohrung 19 im Kernteilabschnitt 30a kreuzförmig erstrecken. Die Verbindungskanäle 20 münden in eine Umfangsnut 39 im Kernteilabschnitt 30a. Diese Nut wiederum steht mit einer als Ableitekanal dienenden Bohrung 35 in Verbindung, die ein Reservoir beziehungsweise Ableitung für das aus dem Kernteilabschnitt 30a über die Verbindungskanäle bzw. die Umfangsnut 39 abgeführte Öl bzw. Ölpartikelgemisch zur Verfügung stellt. Gleichzeitig wird hierdurch auch der Entlastungsbereich 21 erweitert.

Fig. 3b zeigt eine Schnittdarstellung durch den Kernteilabschnitt entlang der Linie A-A in Fig. 3a. Deutlich erkennbar sind hier die kreuzförmig angeordneten Verbindungskanäle 20, die in ihrem zentralen Berührungspunkt die Durchdringungsbohrung 19 aufweisen. Die Durchdringungsbohrung 19 stellt eine Führung und Zentrierung für die Betätigungsstange 10 im elektromagnetischen Ventil zur Verfügung. Die Verbindungskanäle 20 münden in eine ringförmige Nut 39, die ebenfalls im Kernteilabschnitt 30a vorgesehen ist. Diese Nut 39 stellt gleichzeitig den Entlastungsbereich 21 dar und dient als Aufnahmeraum für das abgeschiedene und über die Verbindungskanäle 20 abgeführte Öl oder Ölpartikelgemisch. Die Ringnut 39 steht in Verbindung mit der Bohrung 35, die in dem Ventilteil 23, das heißt in dem den Kernteilabschnitt 30a aufnehmenden Abschnitt des Ventilteils 23, vorgesehen ist. Über die Bohrung 35 kann eine Rückführung des aus der Nut 39 abfließenden Öls bzw. Ölpartikelgemischs erfolgen.

Fig. 4a zeigt eine weitere Ausführungsform des erfindungsgemäßen elektromagnetischen Ventils 1. Die Funktionselemente gleichen denen, der in der Fig. 1 bzw. 3a dargestellten elektromagnetischen Ventile. Ein Unterschied gegenüber der Fig. 3a ergibt sich in der Geometrie des Kernteilabschnittes 30a bzw. der darin vorgesehenen Verbindungskanäle 20. Anders als in Fig. 3b, sind die Verbindungskanäle 20 hier sternförmig angeordnet und erstrecken sich radial zur Durchdringungsbohrung 19 in dem Kernteilabschnitt 30a. Die einzelnen Verbindungskanäle 20 sind, wie dies in Fig. 4b erkennbar ist, als spitz oder konisch zulaufende Bohrungen vorgesehen. Insgesamt bilden die Enden der Verbindungskanäle 20 den im Kernteilabschnitt 30a im Bereich der Verbindungskanäle 20 vorgesehenen Abschnitt der Durchdringungsbohrung 19. Die in Fig. 4a gezeigte Ausführungsform hat den Vorteil, dass unmittelbar in dem Abschnitt des Kernteilabschnittes 30a, der durch die Mündungen der Verbindungskanäle 20 geprägt ist, eine erste Aufweitung der Durchdringungsbohrung ausgebildet ist. Es ergibt sich hier somit bereits ein erster Entlastungsbereich. Gleichzeitig wird aufgrund der Geometrie der Durchdringungsbohrung 19 bzw. der radial hierzu angeordneten Verbindungskanäle 20 ein Abstreifen von durch die Betätigungsstange 10 mitgeführtem Öl oder Ölpartikelgemisch durchgeführt. Dieses wiederum wird über die Verbindungskanäle 20, die mit einer umlaufenden Ringnut 39 abgeleitet. Ein Eintrag in den Ankerraum 12 wird somit wirkungsvoll verhindert. An die umlaufende Nut 39 schließt sich auch im Ausführungsbeispiel der Fig. 4b bzw. 4a eine Bohrung 35 an, die einen Ableitekanal für das in der Nut 39 gesammelte Öl bzw. Ölpartikelgemisch zur Verfügung stellt und ab einem bestimmten Befüllungsgrad der Nut 39 bzw. des durch diese zur Verfügung gesellten Aufnahmeraums 21 das Öl bzw. Ölpartikelgemisch in einen Rücklauf überführt.

Der Kern 32 bzw. der die Verbindungskanäle 20 und die Nut 39 aufweisende Kernteilabschnitt können auch als gesondertes Formteil zur Verfügung gestellt werden. Dieses Formteil kann dabei aus einem von dem Magnetteil 22 abweichenden Material gebildet werden. Es besteht beispielsweise die Möglichkeit, dass der Kern 32 bzw. Kernteilabschnitt 30a oder ein wie in Fig. 1 dargestellter gesonderter Kernteil 30b aus einem Kunststoff oder Kunststoffgemisch hergestellt ist. Hieraus ergeben sich besondere Vorteile bei der Fertigung, da ein derartiges Kunststoffteil beispielsweise in einem Spritzgießverfahren hergestellt werden kann. In dem Herstellungsverfahren kann bereits eine wie in den Fig. 3a oder 4b exemplarisch dargestellte Geometrie der Verbindungskanäle 20 bei der Herstellung berücksichtigt werden. Eine Nachbearbeitung des Kerns 32 beziehungsweis eines Kernteilabschnittes 30a oder Kernteils 30b muss nicht erfolgen. Auch kann eine Umfangsverringerung des Kerns 32 oder Kernteilabschnittes 30a bereits bei der Fertigung vorgesehen werden, sodass sich hier ein Entlastungsbereich ausbildet, wenn der Kern 32 in ein Ventilteil 23 eingesetzt wird.

Neben der hier dargestellten Ausführungsform mit einer Umfangsnut besteht auch die Möglichkeit, dass auf diese Umfangsnut 39 verzichtet wird und die Verbindungskanäle 20 unmittelbar in die Bohrung 35 bzw. einen umfangsreduzierten Bereich des Ventilgehäuses bzw. Ventilteils 23 münden und das abgeschiedene Öl oder Ölpartikelgemisch von dort in einen Rücklauf abgeleitet wird. Die Ausbildung eines Entlastungsbereiches 21 wird hier durch Umfangsreduzierung des Kerns 32, Kernteils 30b oder Kernteilabschnittes 30a oder aber durch eine Materialstärkereduzierung in den Kern 32 aufnehmenden Bereich des Ventilteils 23 erreicht. Umfasst sind auch Druckregelventile oder Proportionaldruckregelventile.

Die jetzt mit der Anmeldung und später eingereichten Ansprüche sind ohne Präjudiz für die Erzielung weitergehenden Schutzes.

Sollte sich hier bei näherer Prüfung, insbesondere auch des einschlägigen Standes der Technik, ergeben, dass das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist.

Auch eine solche Unterkombination ist von der Offenbarung dieser Anmeldung abgedeckt.

Es ist weiter zu beachten, dass die in den verschiedenen Ausführungsformen beschriebenen und in den Figuren gezeigten Ausgestaltungen und Varianten der Erfindung beliebig untereinander kombinierbar sind. Dabei sind einzelne oder mehrere Merkmale beliebig gegeneinander austauschbar. Diese Merkmalskombinationen sind ebenso mit offenbart.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die nur in der Beschreibung offenbart wurden, oder auch Einzelmerkmale aus Ansprüchen, die eine Mehrzahl von Merkmalen umfassen, können jederzeit als von erfindungswesentlicher Bedeutung zur Abgrenzung vom Stande der Technik in den oder die unabhängigen Anspruch/Ansprüche übernommen werden, und zwar auch dann, wenn solche Merkmale im Zusammenhang mit anderen Merkmalen erwähnt wurden bzw. im Zusammenhang mit anderen Merkmalen besonders günstige Ergebnisse erreichen.

## Patentansprüche

1. Elektromagnetisches Ventil (1) mit einem Magnetteil (22) aus wenigstens einer elektrisch ansteuerbaren Spule, einem Kern (32) und einem, in einem Ankerraum (12) vorgesehenen, verschiebbar geführten Anker (11), und mit einem Ventilteil (23), das zumindest einen Zulauf (15), einen Rücklauf (13) und einen Verbraucheranschluss (14) aufweist, wobei das Ventilteil (23) zwischen dem Zulauf (15) und dem Rücklauf (13) oder Verbraucheranschluss (14) mindestens ein durch ein Schließglied (17, 18) verschließbares Sitzventil aufweist, und der Anker (11) mit dem Schließglied (17, 18) zusammenwirkt wofür zwischen Anker (11) und Schließglied (17, 18) eine Betätigungsstange (10) vorgesehen ist, die in einer Durchdringungsbohrung (19) des Kerns (32) angeordnet ist, **dadurch gekennzeichnet, dass** in die Durchdringungsbohrung (19) wenigstens ein Verbindungskanal (20) mündet, der die Durchdringungsbohrung (19) mit einem druckfreien oder druckreduzierten Entlastungsbereich (21) verbindet.

2. Elektromagnetisches Ventil nach Anspruch 1, **dadurch gekennzeichnet, dass** der Kern (32) zwischen dem Ankerraum (12) und dem Ventilteil (23) angeordnet ist.

3. Elektromagnetisches Ventil nach Anspruch 1 oder 2, **dadurch gekennzeichnet, dass** mehrere Verbindungskanäle (20) vorgesehen sind, die sich radial zur Durchdringungsbohrung (19) erstrecken und/oder die Verbindungskanäle (20) gegenüber-liegend, kreuz- oder sternförmig angeordnet sind und/oder der Verbindungskanal(20) und/oder die Verbindungskanäle (20) im Wesentlichen rechtwinklig, senkrecht oder radial und/oder relativ zu der Durchdringungsbohrung (19) geneigt angeordnet ist/sind.

4. Elektromagnetisches Ventil nach einem der vorhergehenden Ansprüche, **dadurch gekennzeichnet, dass** der Kern (32) und/oder der Magnetteil (22) aus zwei oder mehr, insbesondere in axialer Richtung getrennten Teilen gebildet ist und in den Teilen vorgesehene, bevorzugt radial verlaufende Ausnehmungen oder Nuten den wenigstens einen Verbindungskanal (20) bzw. die Verbindungskanäle (20) bilden und/oder der Verbindungskanal (20) bzw. die Verbindungskanäle (20) in die Teile eingeformt ist/sind.

5. Elektromagnetisches Ventil nach einem der vorhergehenden Ansprüche, **dadurch gekennzeichnet, dass** die Betätigungsstange (10) zweiteilig ausgebildet ist, wobei ein erster mit Schließgliedern des Ventils (1) in Wirkverbindung stehender Betätigungsstangenteil und ein zweiter in den die Durchdringungsbohrung (19) aufweisenden Kern (32) und/oder Kernteilabschnitt (30a) einsetzbarer Betätigungsstangenteil vorgesehen ist, wobei der erste Betätigungsstangenteil mit dem zweiten Betätigungsstangenteil in Wirkverbindung steht.

6. Elektromagnetisches Ventil nach einem der vorhergehenden Ansprüche, **dadurch gekennzeichnet, dass** der Kern (32) als ein den Verbindungskanal (20) oder die Verbindungskanäle (20) aufweisender und/oder dem Druckraum zugewandter Bereich des Kerns (32) als gesondertes Bauteil ausgebildet ist und/oder der Kern (32) und/oder Magnetteil (22) oder ein Magnetteilabschnitt einen Zentrierstift oder eine Zentrierbohrung für den zentrierten Einbau des gesonderten Bauteils aufweist.

7. Elektromagnetisches Ventil nach Anspruch 6, **dadurch gekennzeichnet, dass** der Kern (32) und/oder der Magnetteil (22) und/oder das gesonderte Bauteil aus verschiedenartigen Materialien gebildet ist/sind und/oder das gesonderte Bauteil aus Kunststoff, insbesondere aus einem temperatur-, säure- und/oder ölbeständigen Kunststoff, bevorzugt aus Polyphenylensulfit, Polyamid, Polytetrafluorethylen, Polychlortrifluorethylen oder dergleichen oder Mischungen daraus gebildet ist oder eine Beschichtung mit diesen Kunststoffen oder Mischungen daraus aufweist.

8. Elektromagnetisches Ventil nach einem der vorhergehenden Ansprüche, **dadurch gekennzeichnet, dass** die Verbindungskanäle (20) bzw. der Verbindungskanal (20) als durchgehende Bohrung/en im Kern (32) bzw. einem Teil des Kerns (32) vorgesehen ist/sind und/oder der Verbindungskanal (20) bzw. die Verbindungskanäle (20) wenigstens eine Winklung oder Krümmung aufweist/aufweisen.

9. Elektromagnetisches Ventil nach einem der vorhergehenden Ansprüche, **dadurch gekennzeichnet, dass** der Kern (32) und/oder der Magnetteil (22) im Bereich des wenigstens einen Verbindungskanals (20) und/oder sich an den wenigstens einen Verbindungskanal (20) anschließend eine Aufweitung, Bohrung, Einkerbung oder Ausnehmung aufweist und/oder der Kern (32) und/oder der Magnetteil (22) an dem von der Durchdringungsbohrung (19) abgewandten Ende des wenigstens einen Verbindungskanals (20) eine Aufweitung, Bohrung, Ein-kerbung oder Ausnehmung aufweist, in die der Verbindungskanal (20) mündet, wobei die Aufweitung, Bohrung, Einkerbung oder Ausnehmung ein gegenüber dem wenigstens einen Verbindungskanal (20) vergrößertes Volumen aufweist.

10. Elektromagnetisches Ventil nach Anspruch 9, **dadurch gekennzeichnet, dass** die Aufweitung, Bohrung, Einkerbung oder Ausnehmung einen Aufnahmeraum für ein in den wenigstens einen Verbindungskanal (20) abgesondertes ÖI oder Ölpartikelgemisch zur Verfügung stellt.

11. Elektromagnetisches Ventil nach einem der vorhergehenden Ansprüche, **dadurch gekennzeichnet, dass** der wenigstens eine Verbindungskanal (20) in eine im Kern (32) und/oder im Magnetteil (22) und/oder einem den Kern (32) und/oder den Magnetteil (22) aufnehmenden Gehäuse vorgesehene Nut (39) oder Ringnut mündet und die Nut (39) oder Ringnut mit einem Ableitekanal in Verbindung steht und/oder der druckfreie bzw. druckreduzierte Entlastungsbereich (21) in den Kern (32), einen Kernteil (30b) oder einen Kernteilabschnitt (30a) eingeformt oder durch den Kern (32) gebildet oder begrenzt ist.

12. Elektromagnetisches Ventil nach einem der vorhergehenden Ansprüche, **dadurch gekennzeichnet, dass** der druckfreie bzw. druckreduzierte Entlastungsbereich (21) durch eine wenigstens bereichsweise Umfangsreduzierung des Kerns (32) und/oder des Magnetteils (22), insbesondere eine ganz oder teilweise umlaufende Umfangsnut (39) gebildet ist und/oder der druckfreie oder druckreduzierte Entlastungsbereich (21) und/oder ein Aufnahmeraum für das abgesonderte ÖI oder Ölpartikelgemisch in einem den Kern (32) und/oder den Magnet-teil (22) aufnehmenden Abschnitt eines Gehäuses des Ventils (1) vorgesehen ist.

13. Elektromagnetisches Ventil nach Anspruch 12, **dadurch gekennzeichnet, dass** der Abschnitt des Gehäuses eine Umfangs- oder Materialreduzierung in einem Austrittsbereich des wenigstens einen Verbindungskanals (20) aufweist.

14. Elektromagnetisches Ventil nach einem der vorhergehenden Ansprüche, **dadurch gekennzeichnet, dass** das Ventilteil (23) bzw. ein Ventilgehäuse einen insbesondere napfartig ausgeführten Aufnahmebereich (25) für den Kern (32) und/oder den Magnetteil (22) oder einen in dem Ventilteil (23) oder Gehäuseabschnitt einstehenden Abschnitt des Kerns (32) und/oder des Magnetteils (22) aufweist.

15. Elektromagnetisches Ventil nach Anspruch 14, **dadurch gekennzeichnet, dass** zwischen einem Boden (24) des Aufnahme-bereichs (25) und dem Kern (32) und/oder Magnetteil (22) oder dem in den Ventilteil (23) einstehenden Teil des Kerns (32) und/oder des Magnetteils (22) ein Abstand vorgesehen ist und der Abstand einen Rücklauf (13) für ein über den wenigstens einen Verbindungskanal (20) und/oder den Ableitekanal abgeleitetes ÖI bzw. Ölpartikelgemisch zur Verfügung stellt.

## Claims

1. Electromagnetic valve (1) having a magnetic part (22) consisting of at least one electrically controllable coil, a core (32) and a displaceably guided armature (11) provided in an armature space (12), and having a valve part (23) which has at least one inlet (15), a return unit (13) and a consumer connection (14), wherein the valve part (23), between the inlet (15) and the return unit (13) or consumer connection (14), has at least one seat valve which can be closed by a closing member (17, 18), and the armature (11) cooperates with the closing member (17, 18), for which purpose an actuating rod (10) is provided between the armature (11) and the closing member (17, 18), which actuating rod is arranged in a penetration bore (19) of the core (32), **characterised in that** at least one connecting channel (20), which connects the penetration bore (19) to a pressure-free or pressure-reduced relieving area (21), opens into the penetration bore (19).

2. Electromagnetic valve according to claim 1, **characterised in that** the core (32) is arranged between the armature space (12) and the valve part (23).

3. Electromagnetic valve according to claim 1 or 2, **characterised in that** a plurality of connecting channels (20) are provided which extend radially to the penetration bore (19) and/or the connecting channels (20) are arranged opposite one another, in a cross-shaped or star-shaped manner, and/or the connecting channel (20) and/or the connecting channels (20) is/are arranged substantially at right angles, vertically or radially and/or inclined relative to the penetration bore (19).

4. Electromagnetic valve according to any of the preceding claims, **characterised in that** the core (32) and/or the magnetic part (22) is formed from two or more parts, in particular parts separated in the axial direction, and recesses or grooves provided in the parts and preferably running radially, form the at least one connecting channel (20) or the connecting channels (20) and/or the connecting channel(s) (20) is/are moulded into the parts.

5. Electromagnetic valve according to any of the preceding claims, **characterised in that** the actuating rod (10) is constructed in two parts, wherein a first actuating rod part operatively connected to closing members of the valve (1) and a second actuating rod part which can be inserted into the core (32) and/or core part section (30a) having the penetration bore (19) is provided, wherein the first actuating rod part is operatively connected to the second actuating rod part.

6. Electromagnetic valve according to any of the preceding claims, **characterised in that** the core (32) is designed as a separate component as a region of the core (32) having the connecting channel(s) (20) and/or facing the pressure chamber, and/or the core (32) and/or magnetic part (22) or a magnetic part section has a centring pin or a centring bore for the centred installation of the separate component.

7. Electromagnetic valve according to claim 6, **characterised in that** the core (32) and/or the magnetic part (22) and/or the separate component is/are formed from different materials, and/or the separate component is formed from plastic, in particular from a temperature-resistant, acid-resistant and/or oil-resistant plastic, preferably from polyphenylene sulphite, polyamide, polytetrafluoroethylene, polychlorotrifluoroethylene or the like or mixtures thereof or has a coating with these plastics or mixtures thereof.

8. Electromagnetic valve according to any of the preceding claims, **characterised in that** the connecting channel(s) (20) is/are provided as (a) continuous bore(s) in the core (32) or a part of the core (32), and/or the connecting channel(s) (20) has/have at least one angle or curvature.

9. Electromagnetic valve according to any of the preceding claims, **characterised in that** the core (32) and/or the magnetic part (22) has a widening, bore, notch or recess in the region of the at least one connecting channel (20) and/or adjacent to the at least one connecting channel (20), and/or the core (32) and/or the magnetic part (22) has, at the end of the at least one connecting channel (20) facing away from the penetration bore (19), a widening, bore, notch or recess into which the connecting channel (20) opens, wherein the widening, bore, notch or recess has a volume which is larger than that of the at least one connecting channel (20).

10. Electromagnetic valve according to claim 9, **characterised in that** the widening, bore, notch or recess provides a receiving space for an oil or oil particle mixture separated into the at least one connecting channel (20).

11. Electromagnetic valve according to any of the preceding claims, **characterised in that** the at least one connecting channel (20) opens into a groove (39) or annular groove provided in the core (32) and/or in the magnetic part (22) and/or a housing receiving the core (32) and/or the magnetic part (22), and the groove (39) or annular groove is connected to a discharge channel, and/or the pressure-free or pressure-reduced relieving area (21) is moulded into the core (32), a core part (30b) or a core part section (30a) or is formed or limited by the core (32).

12. Electromagnetic valve according to any of the preceding claims, **characterised in that** the pressure-free or pressure-reduced relieving area (21) is formed by an at least regional circumferential reduction of the core (32) and/or of the magnetic part (22), in particular a completely or partially continuous circumferential groove (39), and/or the pressure-free or pressure-reduced relieving area (21) and/or a receiving space for the separated oil or oil particle mixture is provided in a section of a housing of the valve (1) receiving the core (32) and/or the magnetic part (22).

13. Electromagnetic valve according to claim 12, **characterised in that** the section of the housing has a circumferential or material reduction in an outlet region of the at least one connecting channel (20).

14. Electromagnetic valve according to any of the preceding claims, **characterised in that** the valve part (23) or a valve housing has a receiving region (25), designed in particular in the form of a cup, for the core (32) and/or the magnetic part (22) or a section of the core (32) and/or of the magnetic part (22) projecting in the valve part (23) or housing section.

15. Electromagnetic valve according to claim 14, **characterised in that** a spacing is provided between a bottom (24) of the receiving region (25) and the core (32) and/or magnetic part (22) or the part of the core (32) and/or of the magnetic part (22) projecting into the valve part (23), and the spacing provides a return unit (13) for an oil or oil particle mixture discharged via the at least one connecting channel (20) and/or the discharge channel.

## Revendications

1. Soupape électromagnétique (1) avec une partie magnétique (22) constituée d'au moins une bobine à commande électrique, un noyau (32) et un induit (11) guidé de manière mobile prévu dans un espace d'induit (12), et d'une partie de soupape (23) qui présente au moins une arrivée (15), un retour (13) et un raccord de consommateur (14), la partie de soupape (23) présentant entre l'arrivée (15) et le retour (13) ou le raccord de consommateur (14) au moins une soupape à siège qui peut être fermée par un élément de fermeture (17, 18), et l'induit (11) coopérant avec l'élément de fermeture (17, 18), pour lequel une tige d'actionnement (10) est prévue entre l'induit (11) et l'élément de fermeture (17, 18), qui est disposée dans un alésage de pénétration (19) du noyau (32), **caractérisé en ce qu'**au moins un canal de liaison (20) débouche dans l'alésage de pénétration (19), qui relie l'alésage de pénétration (19) à une zone de décharge (21) sans pression ou réduite en pression.

2. Soupape électromagnétique selon la revendication 1, **caractérisée en ce que** le noyau (32) est disposé entre l'espace d'induit (12) et la partie de soupape (23).

3. Soupape électromagnétique selon la revendication 1 ou 2, **caractérisée en ce que** plusieurs canaux de liaison (20) sont prévus, qui s'étendent radialement par rapport à l'alésage de pénétration (19) et/ou les canaux de liaison (20) sont disposés en vis-à-vis, en croix ou en étoile et/ou le canal de liaison (20) et/ou les canaux de liaison (20) sont disposés sensiblement à angle droit, perpendiculairement ou radialement et/ou inclinés par rapport à l'alésage de pénétration (19).

4. Soupape électromagnétique selon l'une quelconque des revendications précédentes, **caractérisée en ce que** le noyau (32) et/ou la partie magnétique (22) sont formés de deux ou plusieurs parties, en particulier séparées dans la direction axiale, et **en ce que** des évidements ou des rainures prévus dans les parties, s'étendant de préférence radialement, forment l'au moins un canal de liaison (20) ou les canaux de liaison (20) et/ou le canal de liaison (20) ou les canaux de liaison (20) sont moulés dans les parties.

5. Soupape électromagnétique selon l'une quelconque des revendications précédentes, **caractérisée en ce que** la tige d'actionnement (10) est conçue en deux parties, une première partie de tige d'actionnement en liaison active avec des éléments de fermeture de la soupape (1) et une seconde partie de tige d'actionnement pouvant être insérée dans le noyau (32) et/ou la section de la partie de noyau (30a) présentant l'alésage de pénétration (19) étant prévues, la première partie de tige d'actionnement étant en liaison active avec la seconde partie de tige d'actionnement.

6. Soupape électromagnétique selon l'une quelconque des revendications précédentes, **caractérisée en ce que** le noyau (32) est conçu comme un composant séparé en tant que zone du noyau (32) présentant le canal de liaison (20) ou les canaux de liaison (20) et/ou étant tourné vers la chambre de pression et/ou le noyau (32) et/ou la partie magnétique (22) ou une section de la partie magnétique présente une goupille de centrage ou un alésage de centrage pour le montage centré du composant séparé.

7. Soupape électromagnétique selon la revendication 6, **caractérisée en ce que** le noyau (32) et/ou la partie magnétique (22) et/ou le composant séparé sont constitués de différents types de matériaux et/ou le composant séparé est constitué de matière plastique, en particulier d'une matière plastique résistant à la température, à l'acide et/ou à l'huile, de préférence de polyphénylène-sulfite, de polyamide, de polytétrafluoroéthylène, de polychlorotrifluoroéthylène ou d'un matériau similaire ou de mélanges de ceux-ci ou présente un revêtement avec ces matières plastiques ou des mélanges de celles-ci.

8. Soupape électromagnétique selon l'une quelconque des revendications précédentes, **caractérisée en ce que** les canaux de liaison (20) ou le canal de liaison (20) sont prévus en tant qu'alésages traversant le noyau (32) ou une partie du noyau (32) et/ou le canal de liaison (20) ou les canaux de liaison (20) présentent au moins un angle ou une courbure.

9. Soupape électromagnétique selon l'une quelconque des revendications précédentes, **caractérisée en ce que** le noyau (32) et/ou la partie magnétique (22) présentent un élargissement, un alésage, une encoche ou un évidement dans la zone de l'au moins un canal de liaison (20) et/ou à proximité de l'au moins un canal de liaison (20) et/ou le noyau (32) et/ou la partie magnétique (22) présentent un élargissement, un alésage, une encoche ou un évidement à l'extrémité de l'au moins un canal de liaison (20) éloigné de l'alésage de pénétration (19), dans lequel le canal de liaison (20) débouche, l'élargissement, l'alésage, l'encoche ou l'évidement présentant un volume accru par rapport à celui de l'au moins un canal de liaison (20).

10. Soupape électromagnétique selon la revendication 9, **caractérisée en ce que** l'élargissement, l'alésage, l'encoche ou l'évidement fournit un espace de réception pour une huile ou un mélange de particules d'huile séparé dans l'au moins un canal de liaison (20).

11. Soupape électromagnétique selon l'une quelconque des revendications précédentes, **caractérisée en ce que** l'au moins un canal de liaison (20) débouche dans une rainure (39) ou une rainure annulaire prévue dans le noyau (32) et/ou dans la partie magnétique (22) et/ou dans un boîtier recevant le noyau (32) et/ou la partie magnétique (22), et la rainure (39) ou la rainure annulaire est en liaison avec un canal d'évacuation et/ou la zone de décharge (21) sans pression ou réduite en pression est moulée dans le noyau (32), une partie de noyau (30b) ou une section de la partie de noyau (30a) ou est formée ou limitée par le noyau (32).

12. Soupape électromagnétique selon l'une quelconque des revendications précédentes, **caractérisée en ce que** la zone de décharge (21) sans pression ou réduite en pression est formée par une réduction périphérique au moins par zones du noyau (32) et/ou de la partie magnétique (22), en particulier une rainure périphérique (39) entièrement ou partiellement circonférentielle, et/ou la zone de décharge (21) sans pression ou réduite en pression et/ou un espace de réception pour l'huile ou le mélange de particules d'huile séparé est prévu dans une section d'un boîtier de la soupape (1) recevant le noyau (32) et/ou la partie magnétique (22).

13. Soupape électromagnétique selon la revendication 12, **caractérisée en ce que** la section du boîtier présente une réduction de circonférence ou de matière dans une zone de sortie de l'au moins un canal de liaison (20).

14. Soupape électromagnétique selon l'une quelconque des revendications précédentes, **caractérisée en ce que** la partie de soupape (23) ou un boîtier de soupape présente une zone de réception (25) réalisée en particulier en forme de pot, pour le noyau (32) et/ou la partie magnétique (22) ou une section du noyau (32) et/ou de la partie magnétique (22) qui fait saillie dans la partie de soupape (23) ou la section de boîtier.

15. Soupape électromagnétique selon la revendication 14, **caractérisée en ce qu'**un écart est prévu entre un fond (24) de la zone de réception (25) et le noyau (32) et/ou la partie magnétique (22) ou une partie du noyau (32) et/ou de la partie magnétique (22) faisant saillie dans la partie de soupape (23), et l'écart prévoit un retour (13) pour une huile ou un mélange de particules d'huile évacué par l'intermédiaire de l'au moins un canal de liaison (20) et/ou du canal d'évacuation.
